# EUROPEAN PATENT APPLICATION

(11) **EP 2 966 046 A1**
(43) Date of publication of application: **13.01.2016**
(21) Application number: 14180453.4
(22) Date of filing: 11.08.2014
(51) Int. Cl.: C03C 15/00, C03C 23/00, H01K 3/02, H01K 3/22, H01K 3/32, C03C 21/00

(54) **Method of and apparatus for de-alkalization of glass surface of light bulb**

(30) Priority: 09.07.2014 US 201462022249 P
(71) Applicant: Linde Aktiengesellschaft, 80331 München (DE)
(72) Inventor: Ma, Ce, Oceanside, CA California 92054 (US); Cigal, Jean-Charles, 01099 Dresden (DE); Carney, Stephen, 81476 München (DE)
(74) Representative: Hofmann, Andreas

(57) **Abstract**

In order to overcome problems that earlier methods of and apparatus for de-alkalization of at least one glass surface of at least one light bulb during manufacture have experienced, it is proposed to use, in particular to inject, hydrogen fluoride (HF), in particular diluted hydrogen fluoride (HF) vapour, as etching agent for the de-alkalization.

## Description

### Technical field of the present invention

The present invention relates to improvements to processes for the manufacture of light bulbs.

More particularly, the present invention relates to a method of as well as an apparatus for de-alkalization of at least one glass surface of at least one light bulb during manufacture.

### Technological background of the present invention

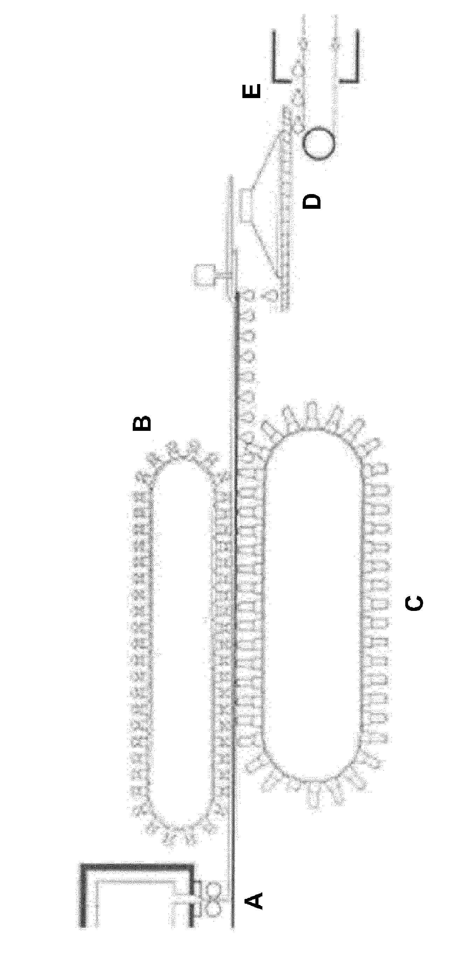

A portion of a standard light bulb manufacturing process / system is shown in the drawing figure:
According to this process, a ribbon of glass flows from a forebearth of a glass furnace on a conveyor belt (reference numeral A in the drawing figure). The conveyor belt carries the glass ribbon between a continuous chain of blow heads on one side of the conveyor belt (reference numeral B in the drawing figure)and a continuous chain of blow moulds close around parison on the other side of the conveyor belt (reference numeral C in the drawing figure).

As the glass ribbon passes between these two continuous chains, the continuous chain of blow heads pierce the ribbon of glass pushing the glass in parison form through preformed holes in the conveyor belt on which the ribbon travels.

When the corresponding blow moulds are in position, the glass is blown to the finished shape of the glass portion of the light bulb, this process thus forming the finished shape. The formed light bulbs are released by the blow moulds and are still attached to the remaining ribbon of glass and hang from the underside of the conveyor belt.

The blown bulbs are separated from the ribbon of glass and conveyor belt by a rotating disc (reference numeral D in the drawing figure). The separated glass bulbs drop into scoops on continuously rotating turntable which ejects the glass bulbs onto a conveyor belt (reference numeral E in the drawing figure).

The glass bulbs are collected and passed on to other portions of the manufacturing operation for coating and then filament and stem attachment. The unused portion of the ribbon of glass continues to at least one cullet bin and is re-used / recycled into the furnace for further bulb production (reference numeral F in the drawing figure).

Many light bulbs are coated with kaolin, a white powdery substance, in order to diffuse the light and produce a gentle, more evenly distributed light, often referred to as "soft" light.

During processing of the light bulb, alkali ions, such as Na, can be present and ultimately be exposed on the interior surface of the glass bulb. These alkali ions become impurities that can develop weathering issues that result in reduction of the useful lifetime of the finished bulb.

Therefore, the interior of the glass bulb is often treated with 1,1-difluoroethane (DFE) and air in a combustion treatment at high temperature to reduce the concentration of alkali ions and therefore improve light bulb lifetimes.

The DFE and air combustion treatment comprises applying the DFE and air in vapour phase during the glass bulb formation at temperatures between 550°C and 600°C. The combustion reaction produces a small amount of HF that serves as an active etch reagent for removing the surface alkali ions.

The DFE acts as a fuel and etch reagent carrier in this process that lasts only milliseconds. Recent restrictions on the use of DFE have arisen in several geographies based on both respiratory health risks and global warming risks.

There is a need in the art for new fuel and etch reagent carriers to perform de-alkalization of light bulb surfaces.

### Disclosure of the present invention: object, solution, advantages

Taking the prior art as discussed into account, an object of the present invention is to overcome problems that earlier methods and apparatus have experienced. This object is accomplished by a method comprising the features of claim 1 as well as by an apparatus comprising the features of claim 6. Advantageous embodiments and expedient improvements of the present invention are disclosed in the respective dependent claims.

The present invention basically provides for improved techniques for ion exchange de-alkalization of at least one glass surface of at least one light bulb, in particular of at least one electric light bulb envelope, using at least one safe and effective carrier gas.

More particularly, de-alkalization of at least one glass bulb during light bulb manufacturing is carried out using diluted hydrogen fluoride (HF) vapour. The direct use of hydrogen fluoride (HF) avoids the hazards and difficulties of using difluoroethane (DFE) and other toxic fluorine containing gases. Use of hydrogen fluoride (HF) also enables greater control of the de-alkalization processes.

In even more detail, the present invention provides for a method of de-alkalization of at least one glass surface of at least one light bulb, in particular of at least one electric light bulb envelope, during manufacture, wherein hydrogen fluoride (HF), in particular diluted hydrogen fluoride (HF) vapour, is used, in particular injected, as etching agent for the de-alkalization.

According to an advantageous embodiment of the present invention, the hydrogen fluoride (HF) may be injected when the temperature of manufacture is between 450°C and 650°C.

According to an expedient embodiment of the present invention, the hydrogen fluoride (HF) may be pre-mixed or mixed with at least one dilution gas, the concentration of the hydrogen fluoride (HF) in the mixture in particular being from 1000 ppm to a few percent.

The dilution gas may favourably be chosen from, in particular wet, air, from a hydrocarbon gas, or from an, in particular wet, inert gas, in particular from nitrogen (N₂), from argon (Ar), or from helium (He).

According to a preferred embodiment of the present invention, the ratio of water to hydrogen fluoride (HF) during the de-alkalization process may be controlled, in particular may be varied from 0.1 to 10, for example may be chosen to be 0.5.

The present invention further provides for an apparatus for de-alkalization of at least one glass surface of at least one light bulb, in particular of at least one electric light bulb envelope, during manufacture, wherein hydrogen fluoride (HF), in particular diluted hydrogen fluoride (HF) vapour, is added as etching agent for the de-alkalization.

According to an advantageous embodiment of the present invention, the hydrogen fluoride (HF) may be injected by means of at least one flow controlled injection system.

According to an expedient embodiment of the present invention, the apparatus may further comprise at least one cylinder, in particular at least one nickel plated steel cylinder or at least one nickel cylinder, of pure hydrogen fluoride (HF) as source of active reagent.

The flow of the hydrogen fluoride (HF)
- may favourably be controlled by means of at least one mass flow controller and/or
- may favourably be provided in the range from 1 ccm² to 100 ccm², in particular in the range from 10 ccm² to 50 ccm².

According to a preferred embodiment of the present invention, the concentration of the hydrogen fluoride (HF) reagent may be adjusted by in-situ mixing with at least one dilution gas, with the dilution ratio being for example about 10.

According to an advantageous embodiment of the present invention, the hydrogen fluoride (HF) reagent may flow through at least one centre delivery tube while the dilution gas may be provided by flow through at least one outer coaxial tube.

According to an expedient embodiment of the present invention, the dilution gas may have a controlled moisture content to assist the de-alkalization.

According to a favoured embodiment of the present invention, the dilution gas may be wetted by bubbling the dilution gas through at least one water container or by using at least one permeation device, the flow rate of the wetted dilution gas being in particular controlled by means of at least one mass flow controller before mixing with the dilution gas.

The percentage of the wet dilution gas may preferably be from one percent to hundred percent, in particular from ten percent to fifty percent, of the total dilution gas.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 6; further improvements, features and advantages of the present invention are explained below in more detail with reference to particular and preferred embodiments by way of non-limiting example and to the appended drawing figure taken in conjunction with the following description of the embodiments, of which:
The drawing figure shows a schematic view of a standard glass bulb manufacturing process / system.

### Detailed description of the drawings; best way of embodying the present invention

Before describing the present inventive embodiments in detail, it is to be understood that the inventive embodiments are not limited in their application to the details of construction and arrangement of parts illustrated in the accompanying drawing figure, since the present invention is capable of other embodiments and of being practiced or carried out in various ways. Also, it is to be understood that the phraseology or terminology employed herein is for the purpose of description and not of limitation.

The present invention relates to improvements for treating the glass surfaces of light bulbs during manufacture. In particular, the present invention avoids the hazards and difficulties of using difluoroethane (DFE) and other toxic fluorine containing gases by using hydrogen fluoride (HF) directly as the etching agent for de-alkalization processes of light bulb manufacturing.

The present invention uses diluted HF vapour that is injected into the glass bulb manufacturing process using a flow controlled injection system, at a point in the process when the temperature is between 450°C to 650°C.

The HF vapour can be mixed with a dilution gas, e.g. air, an inert gas or a hydrocarbon gas to control the strength of the active HF vapour. When air is used as the dilution gas, it is possible to use a standard glass bulb manufacturing system, as shown in the drawing figure.

Inert gases such as N₂, Ar, He, etc can all be used according to the present invention. Alternatively, wet air or wet inert gas can be used for the diluting gas. By controlling the relative humidity of the diluting (carrying) gas, it is possible to control the acidic strength of the mixture.

Because HF is a weak acid, it is possible to accurately control the pH of the wet diluted HF for advantageous etching. A pH in the range of 4 to 7 is preferred.

According to one embodiment of the present invention, a cylinder of pure HF is the source of active reagent. Pure HF cylinders can be nickel plated steel cylinders or smaller nickel cylinders. The flow of HF gas is provided in the range of 1 sccm to 100 sccm, or preferably from 10 sccm to 50 sccm, as controlled by a mass flow controller.

The concentration of HF reagent can be adjusted by in-situ mixing with a dilution gas, e.g. an air or nitrogen gas stream. A dilution ratio of about 10 is preferred. In one arrangement, the HF reagent gas flows through a center delivery tube while the dilution gas is provided by flow through an outer coaxial tube.

In a further embodiment according to the present invention, the dilution gas has a controlled moisture content to assist the de-alkalization process. Wet dilution gas is provided by bubbling of the dilution gas through a water container or by using a permeation device.

The preferred flow rate of wetted dilution gas is controlled by a mass flow controller before mixing with dry dilution gas. The percentage of wet dilution gas is from one percent to hundred percent of total dilution gas, preferably from ten percent to fifty percent of the total dilution gas.

Therefore, the present invention provides a method in which it is possible to control the ratio of moisture (water) to HF during the de-alkalization process. The water/HF ratio is varied from 0.1 to 10 according to the present invention. It has been found that a water/HF ratio of 0.5:1 provides the same etching strength as DFE during the process.

In another embodiment according to the present invention, HF is pre-mixed with a dilution gas, such as N2. The concentration of HF in the mixture can be from 1000 ppm to a few percent. This pre-mixed HF source provides the advantage of being safer to handle than a neat HF cylinder, although more frequent cylinder changes may be required.

There are many advantages to using HF in place of DFE or other toxic fluorinated gases. For example, by using HF, which acts as the direct etching agent for the de-alkalization, the amount of HF needed can be more accurately controlled. Further, the present invention eliminates the need to use dangerous DFE or other fluorinated gases. HF can be safely manufactured and does not present the global warming problems of DFE or the like.

It is anticipated that other embodiments and variations of the present invention will become readily apparent to the skilled artisan in the light of the foregoing description, and it is intended that such embodiments and variations likewise be included within the scope of the present invention as set out in the appended claims.

## Claims

1. A method of de-alkalization of at least one glass surface of at least one light bulb, in particular of at least one electric light bulb envelope, during manufacture, wherein hydrogen fluoride (HF), in particular diluted hydrogen fluoride (HF) vapour, is used, in particular injected, as etching agent for the de-alkalization.

2. The method according to claim 1, wherein the hydrogen fluoride (HF) is injected when the temperature of manufacture is between 450°C and 650°C.

3. The method according to claim 1 or 2, wherein the hydrogen fluoride (HF) is pre-mixed or mixed with at least one dilution gas, the concentration of the hydrogen fluoride (HF) in the mixture in particular being from 1000 ppm to a few percent.

4. The method according to claim 3, wherein the dilution gas is chosen from, in particular wet, air, from a hydrocarbon gas, or from an, in particular wet, inert gas, in particular from nitrogen (N₂), from argon (Ar), or from helium (He).

5. The method according to at least one of claims 1 to 4, wherein the ratio of water to hydrogen fluoride (HF) during the de-alkalization process is controlled, in particular is varied from 0.1 to 10, for example is chosen to be 0.5.

6. An apparatus for de-alkalization of at least one glass surface of at least one light bulb, in particular of at least one electric light bulb envelope, during manufacture, wherein hydrogen fluoride (HF), in particular diluted hydrogen fluoride (HF) vapour, is added as etching agent for the de-alkalization.

7. The apparatus according to claim 6, wherein the hydrogen fluoride (HF) is injected by means of at least one flow controlled injection system.

8. The apparatus according to claim 6 or 7, further comprising at least one cylinder, in particular at least one nickel plated steel cylinder or at least one nickel cylinder, of pure hydrogen fluoride (HF) as source of active reagent.

9. The apparatus according to at least one of claims 6 to 8, wherein the flow of the hydrogen fluoride (HF)
- is controlled by means of at least one mass flow controller and/or
- is provided in the range from 1 ccm² to 100 ccm², in particular in the range from 10 ccm² to 50 ccm².

10. The apparatus according to at least one of claims 6 to 9, wherein the concentration of the hydrogen fluoride (HF) reagent is adjusted by in-situ mixing with at least one dilution gas.

11. The apparatus according to claim 10, wherein the dilution ratio is about 10.

12. The apparatus according to claim 10 or 11, wherein the hydrogen fluoride (HF) reagent flows through at least one centre delivery tube while the dilution gas is provided by flow through at least one outer coaxial tube.

13. The apparatus according to at least one of claims 10 to 12, wherein the dilution gas has a controlled moisture content to assist the de-alkalization.

14. The apparatus according to at least one of claims 10 to 13, wherein the dilution gas is wetted by bubbling the dilution gas through at least one water container or by using at least one permeation device, the flow rate of the wetted dilution gas being in particular controlled by means of at least one mass flow controller before mixing with the dilution gas.

15. The apparatus according to claim 14, wherein the percentage of the wet dilution gas is from one percent to hundred percent, in particular from ten percent to fifty percent, of the total dilution gas.
